# FASCICULE DE BREVET EUROPEEN

(11) **EP 2 947 485 B1**
(45) Date de publication et mention de la délivrance du brevet: **14.04.2021**
(21) Numéro de dépôt: 15168532.8
(22) Date de dépôt: 20.05.2015
(51) Int. Cl.: G02B 6/38, H01R 13/631

(54) **ENSEMBLE DE CONNEXION OPTIQUE AVEC GUIDAGE AMELIORÉ DES FERULES DE CONTACTS OPTIQUES, ENSEMBLE DE CONNECTEURS ET PROCÉDÉ DE CONNEXION ASSOCIÉS**
OPTISCHE VERBINDUNGSEINHEIT MIT VERBESSERTER FÜHRUNG DER OPTISCHEN KONTAKTENDEN, ENTSPRECHENDE STECKER UND VERBINDUNGSVERFAHREN
OPTICAL CONNECTION ASSEMBLY WITH IMPROVED GUIDING OF THE FERRULES OF OPTICAL CONTACTS, ASSOCIATED CONNECTORS AND CONNECTION METHOD

(30) Priorité: 21.05.2014 FR 1454572
(43) Date de publication de la demande: 25.11.2015
(73) Titulaire: RADIALL, 93300 Aubervilliers (FR)
(72) Inventeur: Valencia, Laurent, 73240 Saint Genix Sur Guiers (FR)
(74) Mandataire: Nony

(56) Documents cités:
- EP-A1- 2 444 827
- US-A1- 2012 033 921
- US-A1- 2013 216 189
- US-B1- 6 412 988

## Description

### Domaine de l'invention

La présente invention concerne un ensemble de connexion optique pour contacts optiques à férules.

Elle concerne également un connecteur multi-contacts intégrant une pluralité de telles férules, logées dans des cavités du connecteur multi-contacts.

L'invention vise à obtenir d'abord un guidage précis et fiable de contacts optiques et également à assurer la compatibilité d'une férule pour contact optique avec une cavité de taille standard, initialement prévue pour un contact électrique.

### Etat de l'art

Les connecteurs multi-contacts connus, par exemple ceux connus sous leur dénomination série EPX, ARINC 600, ARINC 404, ou MIL-DTL 38999, comportent des cavités dont la taille est standard, notamment la cavité appelée « Taille 8 » pour contact électrique simple ou pour contact électrique de transmission de données désigné sous la dénomination Quadrax ou Twinax.

Une cavité « Taille 8 » a une forme générale cylindrique de faible diamètre, dont son plus petit diamètre est de l'ordre de 5,60 mm, optimisé pour des contacts électriques et n'est donc pas optimisée pour l'intégration de fibres optiques dans cette même cavité. En effet les contacts électriques connus n'ont pas besoin d'autant de précision au niveau de positionnement aussi bien axial, radial qu'angulaire autour de l'axe de la connexion.

Depuis quelques années, des adaptateurs ont été conçus pour rendre les contacts optiques compatibles avec les cavités standard « Taille 8 »: c'est par exemple le cas des adaptateurs de dénomination Luxcis ou ABS1379. Ces contacts optiques compatibles n'intègrent nécessairement qu'une seule fibre optique.

Or, l'augmentation de la densification des fibres optiques a amené les concepteurs à considérer l'utilisation de férules, dites férules MT, capables de loger chacune de 12 à 72 fibres.

Cependant, la section transversale d'une férule MT classique est élevée au point que le diamètre d'une cavité standard des adaptateurs ne peut pas la loger. Autrement dit, il est impossible d'insérer une férule MT classique dans une cavité standard « Taille 8 ».

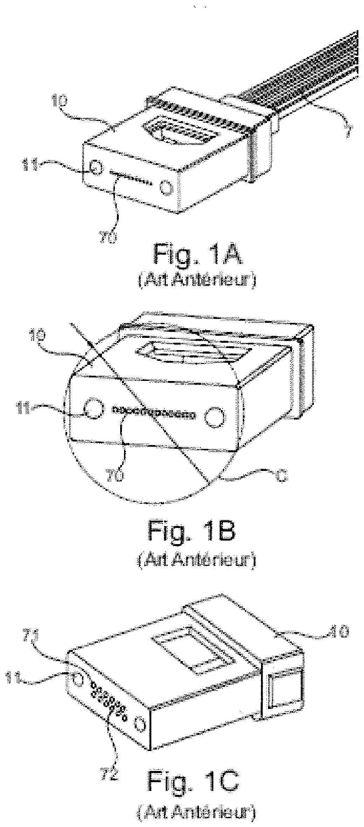

Les figures 1A et 1B illustrent une férule 10 de type MT selon l'état de l'art. Une telle férule 10 reçoit par sa face arrière un faisceau sous la forme d'un ruban de fibres optiques 7. Douze canaux optiques 70 alignés horizontalement selon une seule rangée, débouchent sur la face avant de la férule 10. Chaque canal optique 70 est adapté pour loger individuellement une fibre optique 7.

Deux logements de goupilles 11 cylindriques sont agencés de part et d'autre de la rangée de canaux optiques 70. Une telle férule ne peut pas insérée dans une cavité cylindrique de diamètre inférieur au cercle C inscrit dans la section rectangulaire. La section transversale de la férule étant un rectangle, le diamètre minimal d'encombrement requis pour une telle férule est la distance d'un sommet du rectangle à son sommet opposé.

La demande de brevet WO 2006/029299 A2 a proposé de réduire la section transversale d'une férule MT en modifiant l'agencement des canaux optiques. Ainsi, la férule 10 divulguée dans cette demande de brevet, représentée en figure 1C, comporte des canaux optiques alignés selon deux rangées superposées, de six canaux 71 et 72 chacune. Si cette solution a pour avantage de permettre une réduction effective de la section transversale de la férule, elle présente néanmoins de nombreux inconvénients. Tout d'abord, l'investissement du nouveau moule de fabrication de cette férule est conséquent. Ensuite, l'utilisation d'un ruban optique standard, tel qu'illustré en figure 1A, est incompatible avec la férule à deux rangées de canaux optiques superposées. En outre, les outils de polissage utilisés pour une férule MT classique ne peuvent être mis en œuvre avec la férule à deux rangées de canaux optiques superposées divulguée dans cette demande de brevet. Un autre inconvénient est que le nombre maximal de fibres optiques que la férule divulguée dans cette demande de brevet est moins important qu'une férule MT classique, qui peut en loger jusqu'à 72 fibres, c'est-à-dire un nombre de six rangées de douze canaux chacune. Enfin, réduire la section transversale comme proposé dans cette demande implique un entraxe entre les deux goupilles ou logements de goupille qui est inférieur à ceux classiques, et qui sont notamment ceux des adaptateurs de mesure ou ceux des adaptateurs sur microscope ou encore ceux sur machine de polissage.

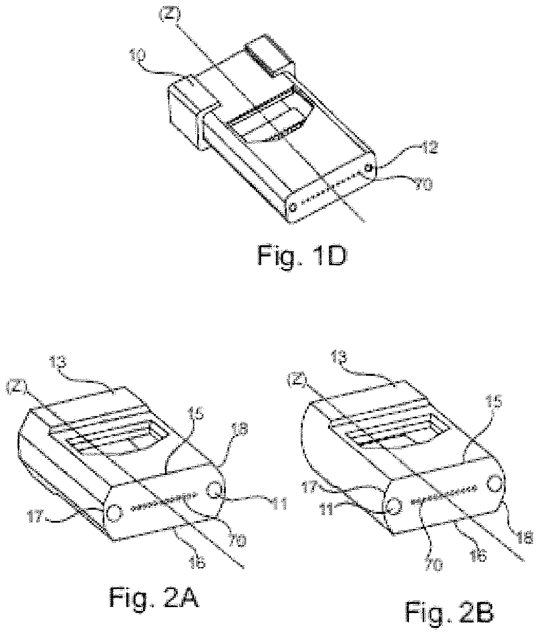

Pour rendre compatible une férule logeant une pluralité de fibres optiques avec une cavité standard, une autre solution, qui viendrait naturellement à l'esprit d'un homme du métier aurait pu consister à réduire le diamètre des logements de goupilles, et faire des logements de goupille de diamètre réduit 12, comme représenté en figure 1D. Cependant, outre les inconvénients liés à l'investissement important d'un moule de réalisation de la férule, réduire le diamètre des logements de goupilles implique la fabrication de nouvelles goupilles.

Il existe donc un besoin pour améliorer les férules pour contact optique, destinées à loger une pluralité de fibres optiques, notamment en vue de permettre leur insertion dans des cavités standard « Taille 8 », sans pour autant générer un investissement important et/ou réduire le nombre de canaux optiques disponibles et/ou modifier le diamètre des logements de goupilles.

Les demandes de brevet US 2013/216189A1 et US 2007014522A1 ainsi que le brevet US 6412988B1 divulguent des férules dont la géométrie n'est pas parallépipédique. Cependant, parmi ces documents, les deux derniers cités n'indiquent pas comment réaliser concrètement l'intégration de fibres optiques dans des cavités d'un connecteur multi-contact et surtout aucun de ces documents ne divulgue de solution pour réaliser un accouplement entre férules complémentaires qui soit aisé et fiable en particulier pour des connecteurs multi-contact.

La demande de brevet EP2444827 divulgue un contact optique dont le corps enveloppe une férule de forme parallépipédique et comporte une portion s'étendant au-delà de la face avant avec des bras de guidage s'étendant au-delà de la face avant de la férule.

La demande de brevet US2012/033921 divulgue un connecteur optique hémaphrodite à férule également de forme parallépipédique, dont le corps comprend deux portions de guidage qui font saillie au-delà de la férule.

Il existe donc un autre besoin pour améliorer l'accouplement des férules pour contact optique, destinées à loger une pluralité de fibres optiques, notamment en vue de le simplifier et de le rendre fiable, plus particulièrement dans des connecteurs multi-contact.

Le but de l'invention est de répondre au moins en partie à ce(s) besoin(s).

### Exposé de l'invention

Pour ce faire, l'invention a tout d'abord pour objet, selon un aspect un ensemble de connexion optique selon la revendication 1.

Selon un premier mode de réalisation de l'invention, la première férule et la deuxième férule comportent une pluralité de canaux optiques adaptés pour loger individuellement une fibre optique, les canaux optiques étant alignés selon une rangée et débouchant sur l'une des faces dite face avant de la première férule et de la deuxième férule, la section transversale de la première férule et de la deuxième férule comportant:
- deux segments parallèles, de même médiatrice et de même longueur,
- deux profils en forme d'arc-de-cercle, convexe vers l'extérieur de la férule, chacun des deux profils reliant une extrémité d'un segment avec la plus proche extrémité de l'autre segment.

Selon un deuxième mode de réalisation de l'invention, la première férule et la deuxième férule sont chacune de forme allongée selon un axe longitudinal (Z) et comportent une pluralité de canaux optiques adaptés pour loger individuellement une fibre optique, les canaux optiques étant alignés selon une rangée et débouchant sur l'une des faces dite face avant de la première férule et de la deuxième férule, la section transversale de la première férule et de la deuxième férule étant un polygone convexe à au moins six côtés dont:
- deux premiers segments parallèles, de même médiatrice et de même longueur,
- deux profils comportant chacun au moins deux deuxième segments, chaque profil reliant une extrémité d'un premier segment avec la plus proche extrémité de l'autre premier segment.

Selon une variante du deuxième mode, la section transversale de la première férule et de la deuxième férule est un octogone à six des côtés de longueurs égales constitués par les deux profils à trois segments de longueurs égales ou différentes.

Selon un troisième mode de réalisation de l'invention, la première férule et la deuxième férule sont chacune de forme parallépipédique allongée selon un axe longitudinal (Z) et comportent une pluralité de canaux optiques adaptés pour loger individuellement une fibre optique, les canaux optiques étant alignés selon une rangée et débouchant sur l'une des faces dite face avant de la première férule et de la deuxième férule.

Ainsi, l'invention bien que simple de mise en œuvre consiste en définir un guidage aisé d'une férule de type MT.

La férule MT est avantageusement retouchée par mise en forme de la géométrie de la section transversale.

Une férule conforme aux premier et deuxième modes de l'invention présente donc une section transversale réduite comparativement à celle d'une férule selon l'état de l'art, ce qui lui permet d'être insérée dans une cavité cylindrique de diamètre réduit, comme une cavité standard, taille 8, tout en conservant toutes les caractéristiques fonctionnelles d'une férule connue de type MT et notamment un nombre de canaux optiques important, typiquement de douze contacts, pouvant être alignés sur une même rangée.

En outre, la retouche de mise en forme géométrique de la section transversale n'implique aucun changement dans les goupilles, qui peuvent donc être standard, ni aucune modification des calibres de polissage de la férule.

Les bras de guidage selon l'invention peuvent s'étendre au plus près de, et de préférence venir épouser la section retouchée des férules conformes à l'invention ou parallélipédique des férules selon l'état de l'art et ainsi permettre un parfait guidage tout en offrant une grande compacité à l'ensemble de connexion.

Les bras de guidage permettent ainsi d'obtenir une grande précision de guidage en permettant le centrage des corps de contact et des férules complémentaires les uns par rapport aux autres et ce selon les trois axes (X, Y, Z).

Selon une variante avantageuse, la première ou la deuxième férule comporte au moins un logement de goupille allongé selon l'axe (Z) et débouchant sur la face avant de la férule.

Selon cette variante, la deuxième férule ou la première férule peut comporter au moins une goupille destiné à être logée dans un logement, la goupille s'étendant au-delà de la face avant de la férule vers l'extérieur de celle-ci.

Selon une caractéristique avantageuse, le corps du premier contact optique et le corps du second contact optique sont de forme générale cylindrique.

Selon une variante avantageuse, le premier contact optique comporte au moins un deuxième bras de guidage au-delà duquel s'étend le corps de la férule. De préférence, le premier contact optique comportant deux deuxième bras de guidage et deux premiers bras de guidage diamétralement opposés deux à deux.

Selon une variante avantageuse, les moyens de guidage du second contact optique sont constitués de deux paires de deux bras allongés selon l'axe (Z) et diamétralement opposés deux à deux en définissant entre eux quatre fentes allongées selon l'axe (Z).

De manière alternative, les moyens de guidage du second contact optique peuvent être constitués de deux bras allongés selon l'axe (Z) comportant chacun en leur sein une gorge allongée selon l'axe (Z), la gorge étant adaptée pour recevoir et guider en translation selon l'axe Z un premier bras de guidage du premier contact optique.

Avantageusement, les premier et second contacts optiques constituent des contacts adaptés pour être insérés dans des cavités cylindriques de taille standard, dite « Taille 8 ».

L'invention concerne également sous un autre des aspects un ensemble de connecteurs selon la revendication 13.

L'invention a enfin pour objet, un procédé de connexion selon la revendication 14.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- les figures 1A à 1D sont des vues en perspective de férules selon l'art antérieur,
- la figure 2A est une vue en perspective d'un exemple de férule selon un conforme à l'invention,
- la figure 2B est une vue en perspective d'un autre exemple de férule conforme à l'invention,
- la figure 3 est une vue en perspective d'une férule complémentaire à celle de la figure 2B et dont les goupilles font saillie au-delà de sa face avant,
- les figures 4A et 4B sont des vues en perspective d'un ensemble de connexion selon un premier mode de réalisation de l'invention avec des férules représentées en figures 2B et 3, ces figures 4A et 4B illustrant respectivement la phase de guidage des contacts optiques et la connexion une fois effectuée,
- les figures 5A et 5B sont des vues en perspective d'un ensemble de connexion selon un deuxième mode de réalisation l'invention avec des férules représentées en figures 2B et 3, ces figures 5A et 5B illustrant respectivement la phase de guidage des contacts optiques et la connexion une fois effectuée,
- les figures 6A et 6B sont des vues en perspective d'un ensemble de connexion avec les mêmes bras de guidage que ceux des figures 5A et 5B, mais avec des férules classiques de forme parallépipédique représentées en figures 1A à 1D, ces figures 6A et 6B illustrant également respectivement la phase de guidage des contacts optiques et la connexion une fois effectuée,
- la figure 7 est une vue en perspective d'un connecteur multi-contacts de type EPX à trois cavités, avant l'insertion d'un contact optique conforme à l'invention,
- la figure 8A est une vue en perspective du connecteur multi-contacts selon la figure 7 logeant un contact optique conforme à l'invention,
- la figure 8B est une vue en perspective d'un connecteur multi-contact EPX complémentaire à celui de la figure 7 logeant un contact optique complémentaire conforme à l'invention,
- la figure 9 est une vue de face d'une férule selon l'état de l'art, de type MT, dans laquelle la partie hachurée représente la matière à enlever pour permettre une insertion dans une cavité standard de « Taille 8 », symbolisée par le cercle C.

Les figures 1A à 1D ont à déjà été commentées en détail en préambule. Elles ne seront donc pas décrites ci-après.

Les termes « avant », « arrière » sont à comprendre dans la description détaillée qui va suivre et dans l'ensemble de la présente demande par référence au sens de connexion. Ainsi, la face avant d'une férule d'un contact optique est celle la face de connexion destinée à se connecter avec celle d'une férule de contact optique complémentaire. A contrario, la face arrière est celle par laquelle les fibres optiques du ruban sont insérées dans la férule.

De même, les termes « vertical », « inférieur », « supérieur », « bas », « haut », « dessous », « dessus » sont à comprendre par référence par rapport à une férule en configuration de connexion avec sa(ses) rangées de canaux optiques à l'horizontal. Ainsi, un segment supérieur d'une férule est celui au-dessus de la rangée de canaux optiques de la férule.

Telle que représentée en figures 2A et 2B, une férule 13 selon l'invention a une forme allongée selon un axe longitudinal (Z). Afin d'expliquer les guidages et connexions selon l'invention, on a représenté les axes X et Y, chacun des axes X, Y, Z étant perpendiculaire aux deux autres.

La férule 13 comporte une seule rangée de douze canaux optiques 70 débouchant sur la face avant de la férule. Chaque canal optique 70 est adapté pour loger une fibre optique. L'ensemble des fibres optiques sous la forme d'un ruban est inséré par la face arrière de la férule. Deux logements de goupille 11 sont agencés de part et d'autre de la rangée de canaux optiques 70.

Dans les exemples représentés, il n'y a qu'une seule rangée de douze canaux, mais il est possible d'avoir plusieurs rangées de canaux afin d'augmenter le nombre de fibres à disposition sur une même férule sans pour autant modifier la géométrie de la férule. Il est ainsi par exemple envisageable de réaliser une férule possédant six rangées de douze canaux, les rangées étant agencées selon la hauteur de la férule et parallèles les unes aux autres.

On a représenté en figure 2A, un exemple de férule 13 à géométrie modifiée conforme l'invention.

La section transversale de la férule 13 représentée en figure 2A comporte des segments supérieur 15 et inférieur 16 qui sont parallèles, de même longueur et dont la médiatrice est confondue. La section transversale de la férule 13 comporte également deux profils 17 et 18 comportant chacun trois segments d'égale longueur. Chaque profil 17, 18 relie une extrémité d'un segment supérieur 15 avec la plus proche extrémité du segment inférieur 16. Ainsi, la section transversale de la férule 13 représentée en figure 2A est un octogone convexe.

Avec une telle férule octogonale 13, ou toute férule polygonale supérieure à 8 faces, l'ensemble des mêmes éléments qui seraient présents sur une férule de section transversale rectangulaire, avec l'avantage de réduire le diamètre utilisable, c'est-à-dire le diamètre nominal d'une cavité dans lequel la férule peut être insérée. En effet, le diamètre limitant c'est-à-dire le plus petit diamètre dans lequel on peut insérer une férule, est, pour un octogone convexe, inférieur à celui d'un rectangle de même longueur et de même largeur. Ainsi, le diamètre limitant dans une férule 13 à section octogonale convexe selon l'invention est la distance d'un sommet de l'octogone à un autre sommet de l'octogone. On peut ainsi envisager d'insérer une férule 13 à section octogonale convexe selon l'invention dans une cavité standard « Taille 8 ».

On a représenté en figure 2B un exemple de férule 13 selon une deuxième alternative l'invention. La section transversale de cette férule 13 comporte également deux segments, à savoir un segment supérieur 15 et un segment inférieur 16. A la différence de la férule représentée en figure 2A, les deux profils 17 et 18 de la figure 2B sont en forme d'arc-de-cercle, convexe vers l'extérieur de la férule, Ici, chacun des deux arcs de cercle relie une extrémité d'un segment supérieur 15 avec la plus proche extrémité du segment inférieur 16.

Les férules 13 selon les première et deuxième alternatives de l'invention ont une section transversale comparativement à celle d'une férule selon l'état de l'art, ce qui leur permet d'être insérées dans une cavité cylindrique de diamètre réduit, comme une cavité standard, taille 8, tout en conservant toutes les caractéristiques fonctionnelles d'une férule connue de type MT et notamment un nombre de canaux optiques important, typiquement de douze contacts, pouvant être alignés sur une même rangée. De plus, les férules 13 selon l'invention peuvent être réalisées à partir de férules existantes par simple retouche de mise en forme géométrique.

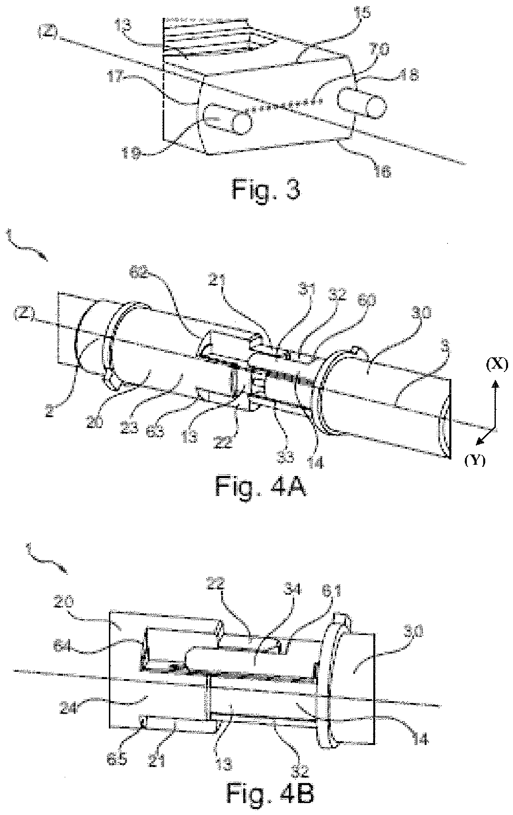

La figure 3 représente une férule 13 selon l'invention comportant un nombre de douze canaux optiques 70 débouchant sur sa face avant et deux goupilles 19 agencées dans des logements de goupilles 11 et qui s'étendent au-delà de la face avant de la férule 13, c'est-à-dire faisant saillie de cette dernière. Ces goupilles 19 constituent chacune un moyen de guidage. La férule 13 avec goupilles 19, est ainsi dite « mâle », et est destinée à être connectée à une férule dite « femelle », dont les logements 11 sont dépourvus de goupilles, comme celles représentées en figure 2B.

Lors de la connexion entre une férule mâle 13 telle que celle représentée en figure 3, et une férule femelle 13 telle que celle représentée en figure 2B, les deux goupilles 19 entrent dans les logements 11 de la férule femelle et guident ainsi en alignement la férule 13 mâle par rapport à la férule femelle jusqu'au contact entre leurs faces avant. De faibles chanfreins aux extrémités des goupilles 19 permettent de compenser d'éventuels légers déports et autres défauts d'alignements les moins importants.

On a décrit ci-avant la connexion entre férules mâle et femelle. On peut aussi envisager de réaliser chacune de deux férules complémentaires selon l'invention avec une seule goupille et d'avoir ainsi une connexion entre les deux férules complémentaires disposant chacune de leur goupille comme moyen de guidage, et recevant chacune une goupille de l'autre férule lors de la connexion.

Les figures 4A et 4B représentent un ensemble de connexion 1 selon un premier mode de réalisation de l'invention. Cet ensemble de connexion comporte deux contacts optiques 2 et 3.

Le premier contact optique 2 comporte un corps 20 et loge une première férule 13 avec une section transversale aux profils 17, 18 en arcs-de-cercle convexes vers l'extérieur de la férule, comme celle illustrée en figure 2B. Le corps 20 de forme générale cylindrique entoure en partie latéralement la férule 13.La férule 13 mâle comporte deux goupilles 19 logées dans les logements de goupilles 11.

Le premier contact optique 2 comporte plusieurs bras de guidage dans le prolongement du corps 20. Il comporte notamment deux bras de guidage de plus grande longueur, dits bras longs 21 et 22, qui sont de forme allongée suivant l'axe Z et sont diamétralement opposés. Ces bras de guidage longs 21 et 22 s'étendent au-delà de la face avant de la férule vers le second contact optique 3.

Le contact optique 2 comporte également deux bras de guidage de moindre longueur, dits bras courts 23 et 24 diamétralement opposés. Les bras de guidage 23 et 24 courts sont en retrait de la face avant de la férule.

Les bras de guidages longs 21, 22 et courts 23, 24 définissent entre eux quatre fentes. Plus précisément, les bras de guidage 21 et 23, 23 et 22, 22 et 24, et 24 et 21, définissent entre eux respectivement les fentes 62, 63, 64, 65.

Les bras de guidage longs 21, 22 et les bras de guidage courts 23, 24 sont directement en contact avec la férule 13 dans le prolongement du corps 20 qui sert de logement à la férule afin de rendre le contact optique cylindrique le plus compact possible.

Le second contact optique 3 comporte un corps 30 et loge une deuxième férule 14 de section transversale identique à la férule 13 logée dans le premier contact optique 2, comme celle illustrée en figure 4A.

La férule femelle 14 est dépourvue de goupilles 19. Le corps 30 de forme générale cylindrique entoure latéralement en partie la férule 14.

Le second contact optique 3 comporte deux paires de bras de guidage. Les deux bras 31 et 32 définissent entre eux une fente 60. Les deux autres bras de guidage 33 et 34 définissent entre eux une seconde fente 61. Ces quatre bras 31, 32, 33, 34 sont uniformément espacés angulairement autour de la férule 14 et s'étendent au-delà de la face avant de la férule 14 vers le premier contact optique 2. Les bras de guidage 31, 32, 33 et 34 se trouvent directement au contact de la férule 14 dans le prolongement du corps 30 qui sert de logement à la férule 14 afin de rendre le contact optique cylindrique le plus compact possible.

Les bras de guidage longs 21 et 22 du premier contact optique 2 sont adaptés pour venir s'insérer chacun respectivement dans les fentes 60 et 61, en étant guidés par coulissement chacun respectivement entre les bras 31, 32 et entre, les bras de guidages 33, 34. Les bras de guidage 31, 32, 33, 34 forment donc les moyens de guidage du deuxième contact optique 3.

Les bras de guidage 31, 32, 33 et 34 sont également adaptés pour venir s'insérer chacun respectivement dans les fentes 62, 63,64, 65. Les bras 31 et 33 sont adaptés pour coulisser de part et d'autre du bras de guidage court 23. De même, les bras 32 et 34 sont adaptés pour coulisser de part et d'autre du bras de guidage court 24.

Pour réaliser la connexion entre le contact optique 2 et le contact optique 3, on réalise ainsi les étapes suivantes:
a/ réaliser un premier guidage en alignement en Y et en rotation Z grâce aux bras de guidage longs 21 et 22, qui pénètrent respectivement chacun dans les fentes 60 et 61 définies entre les bras de guidage 31 et 32, et respectivement entre les bras de guidage 33 et 34.
b/ réaliser un deuxième guidage en alignement en X grâce aux bras de guidage 21, 22 et/ou 31, 32, 33 et 34 sur les corps de férules 13 et 14.
c/ réaliser un troisième guidage en alignement en X et Y grâce aux goupilles 19 de la férule mâle 13 qui viennent alors au regard des logements de goupilles 11 de la férule femelle 14 puis sont insérées dans ces derniers.
d/ continuer les guidages avec les bras de guidage 31, 32, 33 et 34 qui pénètrent dans les fentes 62, 65, 63 et 64, jusqu'à ce que les faces avant des férules mâle 13 et femelle 14 soient en contact de butée.

Les contacts optiques 2 et 3 sont alors connectés.

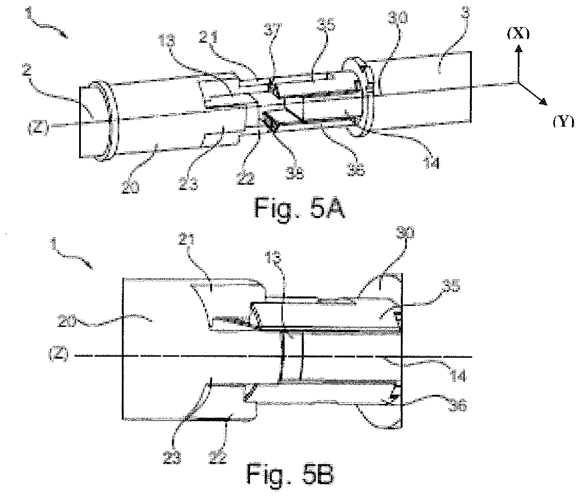

Un second mode de réalisation de l'ensemble de connexion 1 est représenté en figures 5A et 5B.

Selon ce second mode de réalisation, le premier contact optique 2 est identique à celui illustré en figures 4A et 4B et décrit précédemment et comporte une férule 13 avec une section transversale à profils en forme d'arc-de-cercle.

Le second contact optique 3 comporte également une férule 14 de section transversale identique à celle de la férule 13. Le contact optique 3 comporte un corps 30 logeant la férule 14 et comportant deux bras de guidage 35, 36 de forme allongée selon l'axe Z comportant en leur sein une gorge 37, 38 également allongée selon l'axe (Z).

Ces bras de guidage 35, 36 s'étendent depuis le corps 30 du contact optique 3 au-delà de la face avant de la férule 14 vers le premier contact premier optique 2. Les gorges 37, 38 sont adaptées pour guider par coulissement les bras de guidage 21 et 22. De même, les parties latérales des bras de guidage 35 et 36 sont adaptées pour coulisser le long des bras de guidage courts 23 et 24.

Les bras de guidage 35 et 36 se trouvent directement au contact de la férule 14 dans le prolongement du corps 30 qui sert de logement à la férule 14 afin de rendre le contact optique cylindrique le plus compact possible.

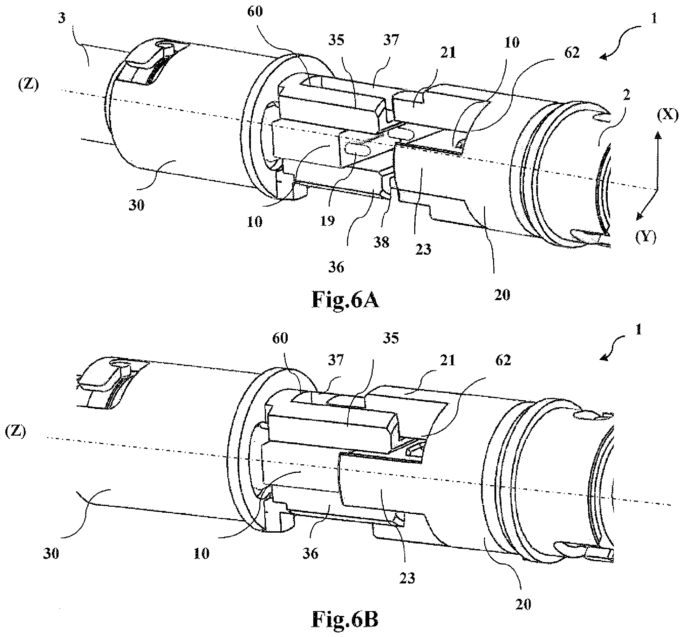

On a représenté en figures 6A et 6B, un ensemble de connexion avec les mêmes contacts optiques 2 et 3 et donc avec les mêmes bras de guidage respectivement 21 à 24 et 35 et 36 que ceux illustrés en figures 5A et 5B.

Les férules 10 mises en œuvre dans cet ensemble de connexion sont de forme parallépipédique.

Comme illustré en figure 6A, ici également, seuls les bras de guidage 23 et 24 courts s'étendent le long des faces principales les plus courtes de la férule femelle 10 sans goupilles et sont directement en contact avec elles.

Les bras de guidage 35 et 36 quant à eux s'étendent le long des faces principales les plus longues de la férule mâle 10 à goupilles 19 et sont directement en contact avec elles.

Les étapes pour connecter le contact optique 2 et le contact optique 3 et réaliser l'ensemble de connexion 1 selon le deuxième mode de réalisation sont les suivantes :
a/ réaliser un premier guidage en alignement en X et en Y ainsi qu'en rotation Z grâce aux bras de guidages 21 et 22 qui pénètrent chacun respectivement dans les gorges 37, 38.
b/ réaliser un second guidage en alignement en X et Y grâce aux goupilles 19 de la férule mâle 13 qui viennent au regard des logements de goupilles 11 de la férule femelle 14 puis sont insérés dans ces derniers.
d/ comme représenté en figures 5B et 6B, les parties latérales des bras 35 et 36 sont amenées au regard des fentes 62, 63, 64 et 65 définies entre les bras de guidage longs 21 et 22 et les bras de guidage courts 23 et 24. Les parties latérales des bras 35 et 36 pénètrent dans les fentes 62, 63, 64 et 65. Les faces avant des férules 13 et 14 sont amenées en contact de butée.

Les contacts optiques 2 et 3 sont alors connectés.

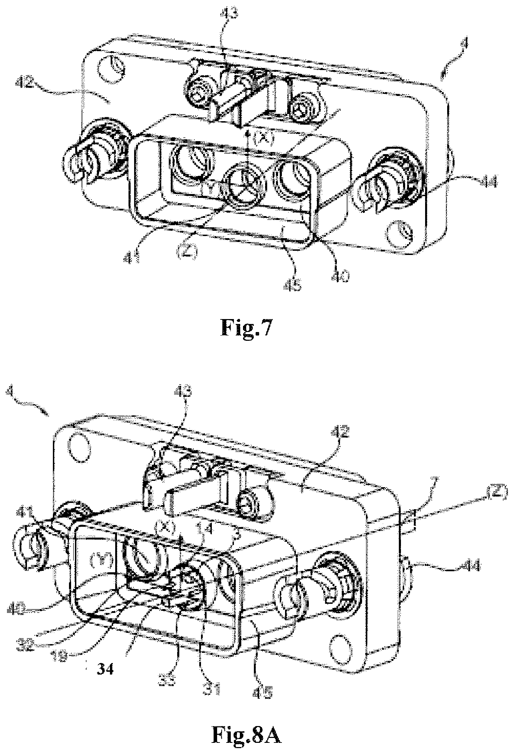

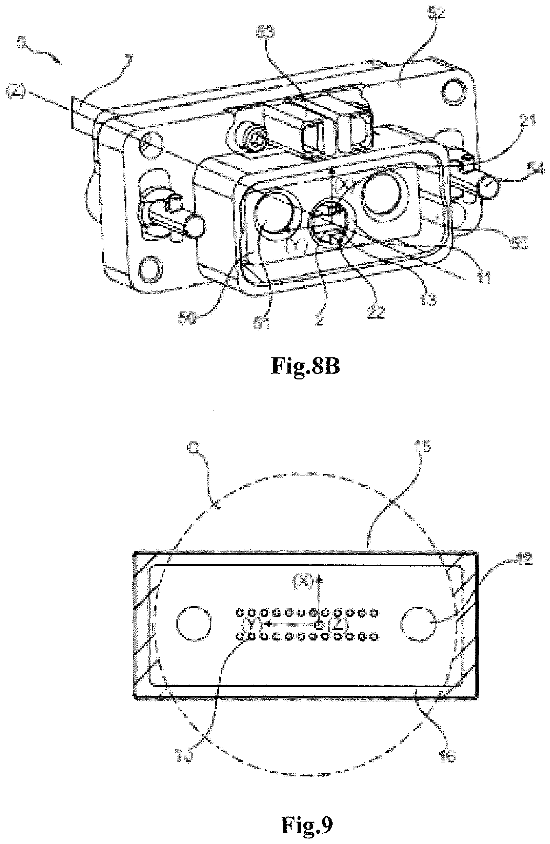

Les exemples décrits ci-dessus des contacts optiques 2, 3 d'ensemble de connexion 1 peuvent être agencés individuellement dans des cavités cylindriques de connecteur multi-contacts connus sous la désignation EPX, comme représenté en perspective en figures 7, 8A et 8B.

Il existe deux connecteurs complémentaires de type EPX. Le premier connecteur 4 représenté en figures 7 et 8A comporte un corps de boîtier 42, dans lequel est agencé un insert 40 comportant en son sein trois cavités cylindriques 41 débouchant chacune sur la face avant du connecteur multi-contacts 4.

Le second connecteur multi-contacts 5 complémentaire au connecteur 4, représenté en figure 8B, comporte également un corps de boîtier 52 dans lequel est agencé un insert 50 complémentaire également à trois cavités cylindriques 51 débouchant sur la face avant du connecteur multi-contacts 5.

L'insert 40 est agencé dans une portion de guidage 45 adaptée pour coopérer avec une portion de guidage 55 de l'insert 50 complémentaire.

Sur le corps de boîtier 42, deux bras de guidage 43 sont agencés au-dessus de l'insert 40 et sont adaptés pour coopérer avec les cavités de guidage 53 du corps de boitier 52.

Deux verrous 44 sont agencés de part et d'autre de l'insert 40, et sont adaptés pour coopérer avec des loquets de verrouillage 54 de l'insert 50 d'un connecteur multicontact EPX complémentaire 5.

De tels connecteurs multi-contacts 4, 5 complémentaires de type EPX peuvent loger chacun respectivement les contacts optiques 2, 3 de l'ensemble de connexion 1 selon l'invention.

Ainsi, comme représenté en figures 8A et 8B, le premier connecteur multi-contacts 4 loge le contact optique 3 de l'ensemble de connexion 1 dans une de ses cavités cylindriques 41 et le second connecteur multi-contacts 5 loge le contact optique 2 de l'ensemble de connexion 1 dans une de ses cavités cylindriques 51. Tel qu'illustré, une seule des cavités 41, 51 des connecteurs EPX 4,5 est occupée par un contact optique 2, 3, mais il est possible de loger un autre contact optique ou un autre type de contact dans chacune des autres cavités.

Pour réaliser la connexion entre deux connecteurs de type EPX 4,5 complémentaires lorsque les contacts optiques 2,3 de l'ensemble de connexion 1 sont logés dans des cavités cylindriques 41, 51, on réalise en sus des étapes déjà décrites, les étapes supplémentaires suivantes :
a0/ guidage en alignement des corps de boîtiers 42 et 52 l'un vers l'autre au moyen des portions de guidage 45 et 55 et au moyen des bras de guidage 43 qui pénètrent dans les cavités de guidage 53,
a1/ mise en regard des contacts optiques 2 et 3, avec mise en contact des première 13 et deuxième 14 férules et la mise en regard individuelle de leurs canaux optiques 70 ;
e/ verrouillage des verrous 44 avec les loquets 54.

Les étapes de connexion ont été décrites pour les connecteurs multi-contacts de type EPX.

Mais d'autres étapes pourraient également être mises en œuvre pour tout connecteur multi-contacts ayant une cavité cylindrique standard de diamètre réduit. Par exemple, une étape de vissage peut être envisagée comme pour un connecteur multi-contacts de type 38999, ou encore une étape de verrouillage par carte comme pour un connecteur multi-contacts de type ARINC.

On a représenté en figure 9 une férule selon l'état de l'art, de type MT, avec la partie hachurée qu'il est nécessaire d'enlever conformément à l'invention pour permettre une insertion dans une cavité standard de taille 8 symbolisée par le cercle C.

D'autres variantes et améliorations peuvent être prévues sans pour autant sortir du cadre de l'invention.

L'expression « comportant un » doit être comprise comme étant synonyme de « comportant au moins un », sauf si le contraire est spécifié.

## Revendications

1. Ensemble de connexion optique **caractérisé en ce qu'**il comporte:
- un premier contact optique (2) comportant au moins un corps (20) destiné à envelopper au moins en partie latéralement une première férule (13) de forme allongée selon un axe longitudinal Z et logée dans ce au moins un corps (20), au moins un premier bras de guidage (21) s'étendant au-delà de la face avant de la première férule (13) et au moins un deuxième bras de guidage (23) au-delà duquel s'étend le corps de la férule (13),
- un second contact optique (3) comportant au moins un corps (30) destiné à envelopper au moins en partie latéralement une deuxième férule (14) logée dans ce au moins un corps (30) du second contact optique (3), des moyens de guidage (31, 32, 33, 34 ; 35, 36) s'étendant au-delà de la face avant de la deuxième férule et destinés à coopérer par coulissement avec le au moins un premier bras de guidage (21) et le au moins un deuxième bras de guidage (23) du premier contact optique (2) afin de réaliser respectivement un premier guidage, en alignement selon l'axe Y et en rotation autour de l'axe Z et un deuxième guidage, en alignement selon l'axe X, puis la connexion entre premier et second contacts optiques, chacun des axes X,Y,Z étant perpendiculaire aux deux autres.

2. Ensemble de connexion optique selon la revendication 1, la première férule (13) et la deuxième férule (14) étant chacune de forme allongée selon l'axe longitudinal Z et comportant une pluralité de canaux optiques (70) adaptés pour loger individuellement une fibre optique, les canaux optiques étant alignés selon une rangée et débouchant sur l'une des faces dite face avant de la première férule et de la deuxième férule, la section transversale de la première férule (13) et de la deuxième férule (14) comportant:
• deux segments (15, 16) parallèles, de même médiatrice et de même longueur,
• deux profils (17, 18) en forme d'arc-de-cercle, convexe vers l'extérieur de la férule, chacun des deux profils reliant une extrémité d'un segment avec la plus proche extrémité de l'autre segment.

3. Ensemble de connexion optique selon la revendication 1, la première férule (13) et la deuxième férule (14) comportant une pluralité de canaux optiques (70) adaptés pour loger individuellement une fibre optique, les canaux optiques étant alignés selon une rangée et débouchant sur l'une des faces dite face avant de la première férule et de la deuxième férule, la section transversale de la première férule (13) et de la deuxième férule (14) étant un polygone convexe à au moins six côtés dont:
• deux premier segments (15, 16) parallèles, de même médiatrice et de même longueur,
• deux profils (17, 18) comportant chacun au moins deux deuxième segments, chaque profil reliant une extrémité d'un premier segment avec la plus proche extrémité de l'autre premier segment.

4. Ensemble de connexion optique selon la revendication 3, la section transversale de la première férule et de la deuxième férule étant un octogone à six des côtés de longueur égale constitués par les deux profils à trois segments de longueur égale.

5. Ensemble de connexion optique selon la revendication 1, la première férule et la deuxième férule (10) étant chacune de forme parallépipédique allongée selon l'axe longitudinal Z et comportant une pluralité de canaux optiques adaptés pour loger individuellement une fibre optique, les canaux optiques étant alignés selon une rangée et débouchant sur l'une des faces dite face avant de la première férule et de la deuxième férule.

6. Ensemble de connexion optique selon l'une des revendications précédentes, la première ou la deuxième férule comportant au moins un logement de goupille (11) allongé selon l'axe Z et débouchant sur la face avant de la férule.

7. Ensemble de connexion optique selon la revendication 6, la deuxième ou la première férule comportant au moins une goupille (19) destiné à être logée dans le logement (11), la goupille (19) s'étendant au-delà de la face avant de la férule (13) vers l'extérieur de celle-ci.

8. Ensemble de connexion optique selon l'une des revendications précédentes, le corps (20) du premier contact optique (2) et le corps (30) du second contact optique (3) étant de forme générale cylindrique.

9. Ensemble de connexion optique selon l'une des revendications précédentes, le premier contact optique (2) comportant deux deuxième bras de guidage (23) et deux premiers bras de guidage (21, 22) diamétralement opposés deux à deux.

10. Ensemble de connexion optique selon l'une des revendications précédentes, les moyens de guidage du second contact optique (3) étant constitués de deux paires de deux bras (31,32, 33, 34) allongés selon l'axe Z et diamétralement opposés deux à deux en définissant entre eux quatre fentes allongées selon l'axe Z.

11. Ensemble de connexion optique selon l'une des revendications 1 à 9, les moyens de guidage du second contact optique étant constitués de deux bras allongés (35, 36) selon l'axe Z comportant chacun en leur sein une gorge (37, 38) allongée selon l'axe Z, la gorge étant adaptée pour recevoir et guider en translation selon l'axe Z un premier bras de guidage du premier contact optique (2).

12. Ensemble de connexion selon l'une des revendications précédentes, le premier et second contact optiques (2, 3) constituant des contacts adaptés pour être insérés dans des cavités cylindriques (41) de taille standard, dite « Taille 8 ».

13. Ensemble d'un connecteur multi-contacts (4 ou 5) et d'un connecteur multi-contacts (5 ou 4) complémentaire, l'ensemble comportant chacun
- un insert (40) comportant une pluralité de cavités cylindriques (41) et
- au moins un moyen de guidage (43, 45) adapté pour guider le connecteur multi-contacts (4 ou 5) lors de sa connexion avec le connecteur multi-contacts (5 ou 4) complémentaire,
ledit connecteur multi-contacts comportant au moins un premier contact optique de l'ensemble de connexion selon l'une des revendications 1 à 12, et ledit connecteur multi-contacts complémentaire comportant au moins un deuxième contact optique de l'ensemble de connexion selon l'une des revendications 1 à 12, lesdits contacts occupant chacun une des cavités cylindriques.

14. Procédé de connexion d'un connecteur multi-contacts (4 ou 5) selon la revendication 13 avec un connecteur multi-contacts (5 ou 4) complémentaire selon la revendication 13, **caractérisé en ce qu'**il comporte les étapes suivantes:
- guidage en alignement des connecteurs multi-contacts à l'aide des moyens de guidage des connecteurs ;
- guidage en alignement selon l'axe X et selon l'axe Y et en rotation autour de l'axe Z ou guidage en alignement selon l'axe Y et en rotation autour de l'axe Z puis aussi selon l'axe X des contacts optiques à l'aide des bras et des moyens de guidage des contacts optiques ;
- mise en contact des première et deuxième férules avec mise en regard individuelle de leurs canaux optiques.

## Patentansprüche

1. Optische Verbindungsanordnung, **dadurch gekennzeichnet ist, dass** sie umfasst:
- einen ersten optischen Kontakt (2), umfassend mindestens einen Körper (20), der dazu bestimmt ist, zumindest teilweise seitlich eine erste Ferrule (13) von entlang einer Längsachse Z langgestreckter Form, die in diesem mindestens einen Körper (20) aufgenommen ist, zu umhüllen, mindestens einen ersten Führungsarm (21), der sich über die Vorderseite der ersten Ferrule (13) hinaus erstreckt, und mindestens einen zweiten Führungsarm (23), über den hinaus sich der Körper der Ferrule (13) erstreckt,
- einen zweiten optischen Kontakt (3), umfassend mindestens einen Körper (30), der dazu bestimmt ist, zumindest teilweise seitlich eine zweite Ferrule, (14), die in diesem mindestens einen Körper (30) des zweiten optischen Kontakts (3) aufgenommen ist, zu umhüllen, wobei sich Führungsmittel (31, 32, 33, 34; 35, 36) über die Vorderseite der zweiten Ferrule hinaus erstrecken, und durch Gleiten mit dem mindestens einen ersten Führungsarm (21) und dem mindesten einen zweiten Führungsarm (23) des ersten optischen Kontakts (2) zusammenzuwirken, um jeweils eine erste Führung, durch Ausrichten entlang der Achse Y und durch Drehen um die Achse Z, und eine zweite Führung, durch Ausrichten entlang der Achse X, dann das Verbinden zwischen ersten und zweiten optischen Kontakten auszuführen, wobei jede der Achsen X, Y, Z senkrecht zu den beiden anderen verläuft.

2. Optische Verbindungsanordnung nach Anspruch 1, wobei die erste Ferrule (13) und die zweite Ferrule (14) jeweils von entlang der Längsachse Z langgestreckter Form sind und eine Mehrzahl von optischen Kanälen (70) umfassen, die geeignet sind, einzeln eine optische Faser aufzunehmen, wobei die optischen Kanäle entlang einer Reihe ausgerichtet sind und an einer der Seiten, Vorderseite genannt, der ersten Ferrule und der zweiten Ferrule münden, wobei der Querschnitt der ersten Ferrule (13) und der zweiten Ferrule (14) umfasst:
• zwei parallele Segmente (15, 16) mit der gleichen Mittelsenkrechten und der gleichen Länge,
• zwei Profile (17, 18) in Form eines nach außerhalb der Ferrule konvexen Kreisbogens, wobei jedes der beiden Profile ein Ende eines Segments mit dem nächstgelegen Ende des anderen Segments verbindet.

3. Optische Verbindungsanordnung nach Anspruch 1, wobei die erste Ferrule (13) und die zweite Ferrule (14) eine Mehrzahl von optischen Kanälen (70) umfassen, die geeignet sind, einzeln eine optische Faser aufzunehmen, wobei die optischen Kanäle entlang einer Reihe ausgerichtet sind und an einer der Seiten, Vorderseite genannt, der ersten Ferrule und der zweiten Ferrule münden, wobei der Querschnitt der ersten Ferrule (13) und der zweiten Ferrule (14) ein konvexes Polygon mit mindestens sechs Kanten umfasst, darunter:
• zwei parallele erste Segmente (15, 16) mit der gleichen Mittelsenkrechten und der gleichen Länge,
• zwei Profile (17, 18), die jeweils mindestens zwei zweite Segmente umfassen, wobei jedes Profil ein Ende eines ersten Segments mit dem nächstgelegenen Ende des anderen ersten Segments verbindet.

4. Optische Verbindungsanordnung nach Anspruch 3, wobei der Querschnitt der ersten Ferrule und der zweiten Ferrule ein Achteck mit sechs gleich langen Kanten ist, die durch die beiden Profile mit drei gleich langen Segmenten gebildet werden.

5. Optische Verbindungsanordnung nach Anspruch 1, wobei die erste Ferrule und die zweite Ferrule (10) jeweils von entlang der Längsachse Z langgestreckter parallelepipedischer Form sind und eine Mehrzahl von optischen Kanälen umfassen, die geeignet sind, einzeln eine optische Faser aufzunehmen, wobei die optischen Kanäle entlang einer Reihe ausgerichtet sind und an einer der Seiten, Vorderseite genannt, der ersten Ferrule und der zweiten Ferrule münden.

6. Optische Verbindungsanordnung nach einem der vorhergehenden Ansprüche, wobei die erste oder die zweite Ferrule mindestens eine entlang der Achse Z langestreckte und an der Vorderseite der Ferrule mündende Stiftaufnahme (11) umfasst.

7. Optische Verbindungsanordnung nach Anspruch 6, wobei die zweite oder die erste Ferrule mindestens einen Stift (19) umfasst, der dazu bestimmt ist, in der Stiftaufnahme (11) aufgenommen zu werden, wobei sich der Stift (19) über die Vorderseite der Ferrule (13) hinaus nach außerhalb davon erstreckt.

8. Optische Verbindungsanordnung nach einem der vorhergehenden Ansprüche, wobei der Körper (20) des ersten optischen Kontakts (2) und der Körper (30) des zweiten optischen Kontakts (3) von zylindrischer Grundform sind.

9. Optische Verbindungsanordnung nach einem der vorhergehenden Ansprüche, wobei der erste optische Kontakt (2) zwei zweite Führungsarme (23) und zwei erste Führungsarme (21, 22) umfasst, die paarweise diametral entgegengesetzt sind.

10. Optische Verbindungsanordnung nach einem der vorhergehenden Ansprüche, wobei die Führungsmittel des zweiten optischen Kontakts (3) aus zwei Paaren aus zwei Armen (31, 32, 33, 34) gebildet werden, die entlang der Achse Z langgestreckt sind und paarweise diametral entgegengesetzt sind, wobei sie untereinander vier entlang der Achse Z langgestreckte Schlitze definieren.

11. Optische Verbindungsanordnung nach einem der Ansprüche 1 bis 9, wobei die Führungsmittel des zweiten optischen Kontakts aus zwei entlang der Achse Z langgestreckten Armen (35, 36) gebildet werden, die jeweils in ihrem Inneren eine entlang der Achse Z langgestreckte Nut (37, 38) umfassen, wobei die Nut geeignet ist, einen ersten Führungsarm des ersten optischen Kontakts (2) aufzunehmen und entlang der Achse Z translatorisch zu führen.

12. Optische Verbindungsanordnung nach einem der vorhergehenden Ansprüche, wobei der erste und zweite optische Kontakt (2, 3) Kontakte bilden, die geeignet sind, in zylindrische Hohlräume (41) mit Standardgröße, "Größe 8" genannt, eingeführt zu werden.

13. Anordnung aus einem Mehrkontakt-Verbinder (4 oder 5) und aus einem komplementär ausgebildeten Mehrkontakt-Verbinder (5 oder 4), wobei die Anordnung jeweils umfasst:
- einen Einsatz (40), der eine Mehrzahl von zylindrischen Hohlräumen (41) umfasst, und
- mindestens ein Führungsmittel (43, 45), das geeignet ist, den Mehrkontakt-Verbinder (4 oder 5) bei seinem Verbinden mit dem komplementär ausgebildeten Mehrkontakt-Verbinder (5 oder 4) zu führen, wobei der Mehrkontakt-Verbinder mindestens einen ersten optischen Kontakt der Verbindungsanordnung nach einem der Ansprüche 1 bis 12 umfasst und der komplementär ausgebildete Mehrkontakt-Verbinder mindestens einen zweiten optischen Kontakt der Verbindungsanordnung nach einem der Ansprüche 1 bis 12 umfasst, wobei die Kontakte jeweils einen der zylindrischen Hohlräume belegen.

14. Verfahren zum Verbinden eines Mehrkontakt-Verbinders (4 oder 5) nach Anspruch 13 mit einem komplementär ausgebildeten Mehrkontakt-Verbinder (5 oder 4) nach Anspruch 13, **dadurch gekennzeichnet, dass** es die folgenden Schritte umfasst:
- Führen durch Ausrichten der Mehrkontakt-Verbinder mithilfe der Führungsmittel der Verbinder;
- Führen durch Ausrichten entlang der Achse X und entlang der Achse Y und durch Drehen um die Achse Z oder Führen durch Ausrichten entlang der Achse Y und durch Drehen um die Achse Z, dann auch entlang der Achse X der optischen Kontakte mithilfe der Führungsarme und -mittel der optischen Kontakte;
- Inkontaktbringen der ersten und zweiten Ferrulen mit einzelnem Gegenüberstellen ihrer optischen Kanäle.

## Claims

1. Optical connection assembly comprising:
- a first optical contact (2) comprising at least one body (20) which is designed to envelop at least partly, laterally, a first ferrule (13) having a form which is elongate according to a longitudinal axis Z and accommodated in this at one body (20) and at least a first guide arm (21) extending beyond the front face of the first ferrule, and at least a second guide arm (23) beyond which the body of the ferrule (13) extends;
- a second optical contact (3) comprising at least one body (30) which is designed to envelop a second ferrule (14) at least partly, laterally, and accommodated in this at one body (30), and guide means (31, 32, 34, 35, 36) extending beyond the front face of the second ferrule and designed to cooperate by sliding with the first guide arm (21) and with the at least one second guide arm (23) of the first optical contact (2) in order to carry out respectively a first guiding to alignment along axis Y and in rotation around axis Z and a second guiding to alignment along axis X, then the connection, between the first and second optical contacts, each of the axis X, Y, Z being perpendicular to the two others.

2. Optical connection assembly according to claim 1, the first ferrule (13) and the second ferrule (14) each having a form which is elongate according to the longitudinal axis Z and comprising a plurality of optical channels (70) which are designed to accommodate an optical fiber individually, the optical channels being aligned according to a row, and opening onto one of the faces, known as the front face, of the first ferrule and the second ferrule, the transverse cross-section of the first ferrule (13) and the second ferrule (14) comprising:
• two parallel segments (15, 16) with the same mid-perpendicular and the same length;
• two profiles (17, 18) in the form of an arc of a circle which are convex towards the exterior of the ferrule, each of the two profiles connecting an end of a segment to the closest end of the other segment.

3. Optical connection assembly according to claim 1, the first ferrule (13) and the second ferrule (14) comprising a plurality of optical channels (70) which are designed to accommodate an optical fiber individually, the optical channels being aligned according to a row, and opening onto one of the faces, known as the front face, of the first ferrule and the second ferrule, the transverse cross-section of the first ferrule and the second ferrule being a convex polygon with at least six sides, wherein there are:
• two first parallel segments (15, 16) with the same mid-perpendicular and the same length;
• two profiles (17, 18) each comprising at least two second segments, each profile connecting an end of a first segment to the closest end of the other first segment.

4. Optical connection assembly according to Claim 3, the transverse cross-section of the first ferrule and of the second ferrule being an octagon wherein six of the sides have equal lengths constituted by the two profiles with three segments with lengths which are equal.

5. Optical connection assembly according to Claim 1, the first ferrule and the second ferrule (14) each having a parallepipedic shape which is elongate according to the longitudinal axis Z and comprising a plurality of optical channels which are designed to accommodate an optical fiber individually, the optical channels being aligned according to a row, and opening onto one of the faces, known as the front face, of the first ferrule and the second ferrule.

6. Optical connection assembly according to one of the preceding claims, the first or the second ferrule comprising at least one pin receptacle which is elongate according to the axis Z and opens onto the front face of the ferrule.

7. Optical connection assembly according to Claim 6, the second ferrule or the first ferrule comprising at least one pin which is designed to be accommodated in the receptacle (11), the pin (19) extending beyond the front face of the ferrule towards the exterior of the latter.

8. Optical connection assembly according to one of the preceding claims, the body (20) of the first optical contact (2) and the body (30) of the second optical contact (3) having a generally cylindrical form.

9. Optical connection assembly according to one of the preceding claims, the first optical contact (2) comprising two second guide arms (23) and two first guide arms (21, 22) which are diametrically opposite in pairs.

10. Optical connection assembly according to one of the preceding claims, the guide means of the second optical contact (3) consisting of two pairs of two arms (31, 32, 33, 34) elongated according to the axis Z and diametrically opposite in pairs, whilst defining between one another four slots which are elongate according to the axis Z.

11. Optical connection assembly according to one of the Claims 1 to 9, the guide means of the second optical contact consisting of two arms (35, 36) elongated according to the axis Z, each comprising in their interior a groove which is elongate according to the axis Z, the groove being designed to receive and guide in translation according to the axis Z a first guide arm for the first optical contact.

12. Optical connection assembly according to one of the preceding claims, the first and second optical contacts constituting contacts which are designed to be inserted in cylindrical cavities with a standard size, known as "size 8".

13. An assembly of multi-contact connector (4 or 5) and a complimentary multi-contact connector (5 or 4), the assembly comprising:
- an insert (40) comprising a plurality of cylindrical cavities (41);
- at least one guide means (43, 45) which is designed to guide the multi-contact connector (4 or 5) during its connection to the complementary multi-contact connector (5 or 4), said multi-contact connector comprising at least one first optical contact of the connection assembly according to one of the claims 1 to 12, and said complimentary multi-contact connector comprising at least one second optical contact of the connection assembly according to one of the claims 1 to 12, said contacts each filling one of the cylindrical cavities.

14. Method for connection of a multi-contact connector (4 or 5) according to Claim 13, with a complementary multi-contact connector (5 or 4) according to Claim 13, **characterized in that** it comprises the following steps:
- guiding to alignment of the multi-contact connectors by means of means for guiding the connectors;
- guiding to alignment according to axis X and according to axis Y and in rotation around axis Z or guiding to alignment according to axis Y and in rotation around axis Z then also according axis X then also of the optical contacts by means of the arm(s) and the means for guiding the optical contacts;
- putting the first and second ferrules into contact, with individual placing opposite one another of their optical channels.
